# EUROPEAN PATENT SPECIFICATION

(11) **EP 2 031 206 B1**
(45) Date of publication and mention of the grant of the patent: **31.03.2010**
(21) Application number: 07115409.0
(22) Date of filing: 31.08.2007
(51) Int. Cl.: F01N 9/00, F01N 11/00, G01N 21/53

(54) **Method for detecting failures in a particulate trap**
Verfahren zur Fehlererkennung in einem Partikelfilter
Procédé pour détecter des défaillances dans un piège à particules

(43) Date of publication of application: 04.03.2009
(73) Proprietor: Iveco Motorenforschung AG, 9320 Arbon (CH)
(72) Inventor: Hagin, Harald, 8280 Kreuzlingen (CH)
(74) Representative: Borsano, Corrado

(56) References cited:
- WO-A-01/69236
- DE-A1- 2 442 968
- DE-A1-102005 006 368

## Description

### SCOPE OF THE INVENTION

The present invention relates to a method for detecting failures in a particulate trap, in particular a particulate trap arranged on the exhaust line of an internal combustion engine, for example a diesel engine, more particularly of a vehicle.

### PRIOR ART

In the engine sector, in particular in the automotive industry, but also for stationary installations, increasing use is being made of systems to reduce pollutant emissions, also in order to comply with stricter legal requirements.

Different types of sensors are employed to ensure the efficiency of the devices used to reduce the pollutant content. Said sensors are capable of sensing composition and physical conditions even at different points on the exhaust line (for example the temperature of the exhaust gases) in order to adjust the engine accordingly to reduce pollutant emissions, dose reagents and signal any failures. Such sensors include oxygen content sensors (lambda sensors) and nitrogen oxide sensors, which can also be installed on board the vehicle and thus used during normal operation and for which control logic has been implemented to enable failure diagnosis. In the automotive industry, these kind of sensors are very often applied, as an integral part of the vehicle On-Board-Diagnosis (OBD) system, in order to guarantee the quality of emissions during engine operation.

In the case of diesel engines, which are frequently used in the industrial vehicle sector, particulates are an especially important source of pollution. Various processes are used to reduce the particulate content and these increasingly involve the use of particulate traps. A variety of such traps are available, including regenerative traps. Depending on the type of trap, various methods are then used to burn the trapped particulates. According to prior art patent document DE 102005006368 A1 it's disclosed an on board particulate diagnostic system for determining the opacity of exhaust gas lowing through a filter trap by using an optical sensor.

It is not yet possible to detect trap failures or malfunctions during normal vehicle operation, since there are no compact and cost-effective sensors capable of detecting particulates in the exhaust fumes, but only systems capable of performing measurements during tests carried out in the workshop.

Failures can therefore only be discovered and repaired when the vehicle undergoes periodical servicing. This means that vehicles, and also other installations, could be made to run for a considerable time in conditions that might be harmful for the environment and that are, in any case, illegal.

### SUMMARY

The problems described above have now been solved according to the present invention with a method for detecting failures in a particulate trap for exhaust gases from an internal combustion engine, **characterized in that** it comprises the sensing of the formation of a layer of particulates deposited on the walls of a line through which said gases flow, downstream of said trap, by means of an optical sensor detecting radiation reflected by said walls of the line.

The invention also relates to a system for reducing the particulate content of the exhaust gases of an internal combustion engine, comprising an exhaust line for said gases from said engine, a particulate trap arranged on said line and an optical sensor arranged on said line downstream of said trap, **characterized in that** said optical sensor is adapted to sense the formation of a layer of particulates deposited on the walls of said line, and a vehicle provided with an internal combustion engine and said system.

The invention relates in particular to that set forth in the claims, which are attached hereto.

### LIST OF DRAWINGS

The present invention will now be illustrated by means of the following detailed description of preferred but not exclusive embodiments, provided merely by way of example, with the help of the drawings attached hereto whereof:
figures 1a and 1b are diagrams of a system for reducing the particulate content according to two different embodiments of the invention;
figures 2a to 2e illustrate a detail of the exhaust gas line downstream of the trap, comprising an optical sensor in a system according to the present invention.

### DETAILED DESCRIPTION OF A PREFERRED EMBODIMENT

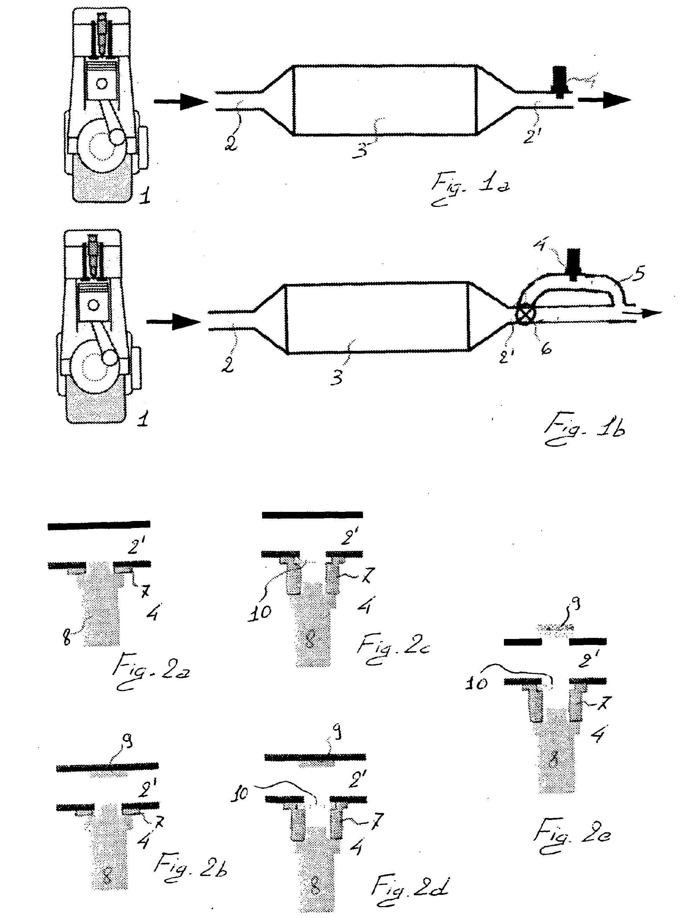

With reference to figure 1, a system for reducing the particulate content of the exhaust gases coming from an internal combustion engine 1 is illustrated. Said engine can be a diesel engine or a gasoline engine with direct-injection, in particular of a vehicle. Exhaust gases from said engine flow through an exhaust gas line 2 provided with the particulate trap 3, which can be of a type known in the prior art. With the trap fully operational, there must be no build-up of particulates on the walls of the portion 2' of the line downstream of the trap. If, on the other hand, there is a trap failure or malfunction, a layer of particulates rapidly forms on the walls. An optical sensor 4 is capable of sensing the formation of said layer. The sensor can be of a known type and can be based on the use of any suitable type of radiation, for example infrared, UV, visible light. It can have a radiation source and detector. These can be incorporated in a single body, and the detector can be suitable to detect the radiation reflected by the walls of the line, as illustrated in figures 2a to 2e. The sensor and detector can also be separate; for example, the wall of the line can be provided with a window that is transparent to radiation and the detector and the source can be on opposite sides of the window to sense the formation of a layer on the window.

In order to prevent incorrect sensing, for example due to condensate deposits on the sensor or reflector surface, the gases must have been at a sufficiently high temperature for an appropriate length of time before sensing commences. For example, in vehicle engines the minimum temperature can be 100 °C. If the gas is too hot this may result in the combustion of the deposited soot layer. Therefore control logic can be used, for example by an electronic sensing and monitoring unit on board the vehicle. For example sensing can only be performed if the temperature, measured by a specific sensor, has been within a certain range for an appropriate length of time, for example between 100 and 500 °C. Other types of logic can be conceived by the person skilled in the art. When a particulate layer is sensed, the appropriate actions can be implemented, such as the activation of indicators or engine torque limiting devices, etc., in accordance with the OBD legislation.

The logic must also take into account the normal efficiency of the trap. Modern ceramic traps have extremely good trapping efficiency (>99.5%) and there should be no build-up of a layer of particulates. If some build-up is to be expected in the very long-term, this can be cleaned up once detected and, if the layer does not form again within a given time, the sensor reading can be disregarded.

Systems can be installed to protect the sensor and create suitable conditions for sensing. For example, in the embodiment illustrated in figure 1b, the sensor is located in a by-pass 5 of the exhaust line. According to a possible embodiment of the invention, the by-pass is only supplied, via a valve 6, under the appropriate gas conditions, and can be used together or alternatively to make the gases flow at the appropriate speed, in order to allow a layer to be deposited without any interference. Other means can be conceived, such as widening of or recesses in the wall of the line to reduce the speed of the gas flow and house the sensor. Resistances or other means for heating the line or the gases in correspondence with the sensor can also be provided.

Figures 2a to 2e illustrate the possible sensor structures. The body 8 of the sensor, comprising the source and detector, can be arranged externally in relation to the line 2' and look towards the inside through a specific opening. The radiation reflected on a portion of the wall opposite the opening can be sensed. The body 8 can be thermally insulated from the wall by means of a support made of a suitable material 7. If the wall is made of a type of material which makes sensing impossible, the wall may comprise a reflective target 9 made of a suitable material (figures 2b, 2d and 2e). There can be a window 10 made of material that is transparent to radiation (for example silica glass) to protect the sensor (figures 2c, 2d and 2e) and possibly the portion of wall on which sensing is performed or the target (figure 2e).

Other embodiments are also possible.

Even if failures are not detected immediately, thanks to the present invention the appropriate action can be taken within a much shorter time in case of a failure, particularly in case of a vehicle, than when simply relying on periodical servicing.

## Claims

1. Method for detecting failures in a particulate trap for exhaust gases from an internal combustion engine, ***characterized in that*** it comprises the sensing of the formation of a layer of particulates deposited on the walls of a line (2') through which said gases flow, downstream of said trap (3), by means of an optical sensor (4') detecting radiation reflected by said walls of the line (2').

2. Method according to claim 1, ***characterized in that*** said engine is the engine of a vehicle and said sensing is performed when the temperature of the exhaust gases is within a given range.

3. Method according to claim 2, ***characterized in that*** said temperature range is between 100 and 500 °C.

4. Method according to claim 2 or 3, ***characterized in that** said* sensing is performed if said temperature range has been maintained for a preset length of time.

5. System for reducing the particulate content of the exhaust gases of an internal combustion engine (1), comprising an exhaust line (2, 2') for said gases from said engine, a particulate trap (3) arranged on said line and an optical sensor (4) arranged on said line downstream of said trap (3), ***characterized in that*** said optical sensor (4) is adapted to sense the formation of a layer of particulates deposited on the walls of said line.

6. System according to claim 5, ***characterized in that*** said sensor (4) is adapted to detect the radiation reflected by said walls of said line (2').

7. System according to claim 5 or 6, ***characterized in that*** said line is provided with a by-pass (5) or a widened portion and said sensor is located in correspondence with said by-pass or widened portion.

8. Vehicle provided with an internal combustion engine and system according to any claim 5 to 7.

## Patentansprüche

1. Verfahren zur Detektion von Störungen in einer Partikelabfangeinrichtung für Abgase von einem Verbrennungsmotor,
**dadurch gekennzeichnet, dass**
es umfasst, dass die Bildung einer Schicht von Partikeln, die an den Wänden einer Leitung (2'), durch die die Gase strömen, abgeschieden wird, stromabwärts der Abfangeinrichtung (3) mittels eines optischen Sensors (4') erfasst wird, der eine von den Wänden der Leitung (2') reflektierte Strahlung detektiert.

2. Verfahren nach Anspruch 1,
**dadurch gekennzeichnet, dass**
der Motor der Motor eines Fahrzeugs ist und das Erfassen ausgeführt wird, wenn die Temperatur der Abgase innerhalb eines gegebenen Bereichs liegt.

3. Verfahren nach Anspruch 2,
**dadurch gekennzeichnet, dass**
der Temperaturbereich zwischen 100 und 500°C liegt.

4. Verfahren nach einem der Ansprüche 2 oder 3,
**dadurch gekennzeichnet, dass**
das Erfassen ausgeführt wird, wenn der Temperaturbereich für eine vorgewählte Zeitlänge beibehalten worden ist.

5. System zur Reduzierung des Partikelgehalts der Abgase eines Verbrennungsmotors (1), umfassend eine Abgasleitung (2, 2') für die Gase von dem Motor, eine Partikelabfangeinrichtung (3), die an der Leitung angeordnet ist, und einen optischen Sensor (4), der an der Leitung stromabwärts der Abfangeinrichtung (3) angeordnet ist,
**dadurch gekennzeichnet, dass**
der optische Sensor (4) derart angepasst ist, um die Bildung einer Schicht aus Partikeln, die an den Wänden der Leitung abgeschieden wird, zu erfassen.

6. System nach Anspruch 5,
**dadurch gekennzeichnet, dass**
der Sensor (4) derart angepasst ist, um die von den Wänden der Leitung (2') reflektierte Strahlung zu detektieren.

7. System nach einem der Ansprüche 5 oder 6,
**dadurch gekennzeichnet, dass**
die Leitung mit einer Umgehung (5) oder mit einem verbreiterten Abschnitt versehen ist und der Sensor in Übereinstimmung mit der Umgehung oder dem verbreiterten Abschnitt angeordnet ist.

8. Fahrzeug, das mit einem Verbrennungsmotor und einem System gemäß einem der Ansprüche 5 bis 7 versehen ist.

## Revendications

1. Procédé pour détecter des défaillances dans un piège à particules pour des gaz d'échappement d'un moteur à combustion interne, **caractérisé en ce qu'**il comprend la détection de la formation d'une couche de particules déposée sur les parois d'une conduite (2') à travers laquelle lesdits gaz s'écoulent, en aval dudit piège (3), au moyen d'un capteur optique (4') détectant le rayonnement réfléchi par lesdites parois de la conduite (2').

2. Procédé selon la revendication 1, **caractérisé en ce que** ledit moteur est le moteur d'un véhicule, et ladite détection est exécutée lorsque la température des gaz d'échappement se situe dans une plage donnée.

3. Procédé selon la revendication 2, **caractérisé en ce que** ladite plage de température est entre 100 et 500°C.

4. Procédé selon la revendication 2 ou 3, **caractérisé en ce que** ladite détection est exécutée si ladite plage de température a été maintenue pendant une longueur de temps pré-établie.

5. Système pour réduire la teneur en particules des gaz d'échappement d'un moteur à combustion interne (1), comprenant une conduite d'échappement (2, 2') pour lesdits gaz dudit moteur, un piège à particules (3) agencé sur ladite conduite et un capteur optique (4) agencé sur ladite conduite en aval dudit piège (3), **caractérisé en ce que** ledit capteur optique (4) est conçu pour détecter la formation d'une couche de particules déposée sur les parois de ladite conduite.

6. Système selon la revendication 5, **caractérisé en ce que** ledit capteur (4) est apte à détecter le rayonnement réfléchi par lesdites parois de ladite conduite (2').

7. Système selon la revendication 5 ou 6, **caractérisé en ce que** ladite conduite est munie d'une dérivation (5) ou d'une portion élargie, et ledit capteur est situé en correspondance avec ladite dérivation ou portion élargie.

8. Véhicule muni d'un moteur à combustion interne et d'un système selon l'une quelconque des revendications 5 à 7.
